Europäisches Patentamt

European Patent Office

Office européen des brevets

(11) Publication number: **0 355 180 B1**

## EUROPEAN PATENT SPECIFICATION

(45) Date of publication of patent specification: **20.01.93**

(51) Int. Cl.⁵: **F25B 49/00**, F25B 41/04

(21) Application number: **88113446.4**

(22) Date of filing: **18.08.88**

(54) Cooling apparatus and control method.

(43) Date of publication of application:
**28.02.90 Bulletin 90/09**

(45) Publication of the grant of the patent:
**20.01.93 Bulletin 93/03**

(84) Designated Contracting States:
**DE FR GB SE**

(56) References cited:

| | |
|---|---|
| EP-A- 0 152 608 | GB-A- 701 892 |
| GB-A- 898 327 | US-A- 2 252 300 |
| US-A- 2 707 868 | US-A- 2 936 595 |
| US-A- 2 944 411 | US-A- 3 368 364 |
| US-A- 3 390 538 | US-A- 3 390 539 |
| US-A- 3 460 354 | US-A- 3 739 596 |
| US-A- 4 286 437 | US-A- 4 420 947 |
| US-A- 4 735 059 | US-E- 27 522 |

(73) Proprietor: **NIPPON TELEGRAPH AND TELE-PHONE CORPORATION**
**1-6 Uchisaiwaicho 1-chome Chiyoda-ku Tokyo(JP)**

(72) Inventor: **Nakao, Masaki**
**1-35-12-102, Nishikubo**
**Musashino-shi Tokyo(JP)**
Inventor: **Ohshima, Kazuo**
**2-22, Tateno-cho**
**Nerima-ku Tokyo(JP)**
Inventor: **Uekusa, Tsuneo**
**4-13-6, Nobuto**
**Chiba-shi Chiba(JP)**

(74) Representative: **Pfenning, Meinig & Partner**
**Mozartstrasse 17**
**W-8000 München 2(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a method for controlling a cooling apparatus, more particularly, to a method when an outside temperature is low and to a cooling apparatus for performing the method.

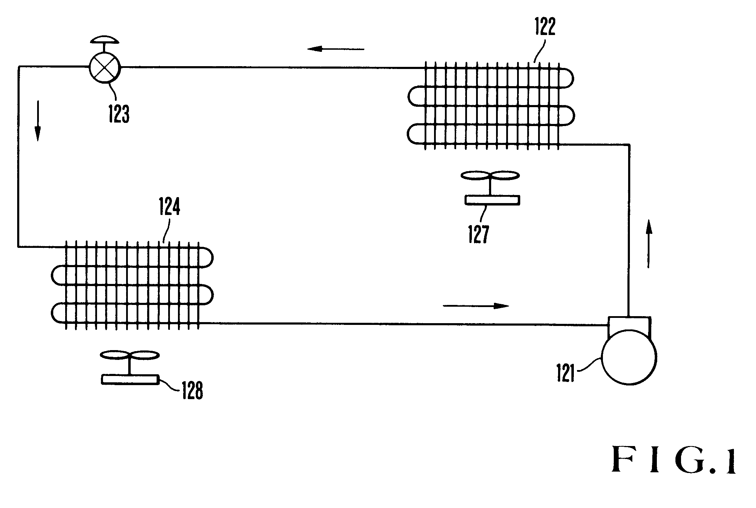

Fig. 1 shows a basic arrangement of a cooling apparatus. A refrigeration cycle is mainly constituted by four components, i.e., a compressor 121, a condenser 122, an expansion valve 123, and an evaporator 124. In an air cooling type air conditioner, an evaporator is installed indoors, and a condenser is installed outdoors. A refrigerant is sealed in the refrigeration cycle, and the refrigerant is circulated among the components, so that indoor heat can be exhausted outside a room.

The function of this refrigeration cycle will be explained below. In the evaporator 124, a low-pressure refrigerant liquid takes indoor heat away and is evaporated to be a gas. The refrigerant gas vaporized in the evaporator is sent to the compressor 121, and is compressed to a high-temperature, high-pressure gas. The obtained gas is supplied to the condenser 122. In the condenser, heat is exhausted to outer air in an opposite way to the evaporator, thus converting the gas into a high-pressure liquid. The high-pressure liquid is supplied to the expansion valve 123, and is expanded to a low-temperature, low-pressure liquid. The obtained liquid is supplied again to the evaporator. In this manner, this cycle is repeated. More specifically, upon operation of the compressor, the refrigerant gas having a lower saturation temperature than a room temperature is compressed to a gas having a higher saturation temperature than that of outer air, thereby exhausting indoor heat outside a room.

However, when an outside temperature is low, if the cooling apparatus shown in Fig. 1 is operated as in a case wherein an outside temperature is high, exchange heat of the condenser is enhanced, and a condensing pressure as a refrigerant pressure in the condenser is decreased. When the condensing pressure is decreased, an evaporative pressure as a refrigerant pressure in the evaporator is decreased accordingly. As a result, the evaporator is frosted, or is operated under an over-dehumidified condition. If the compression power in the compressor is decreased so that the evaporative pressure is not decreased even if the condensing pressure is decreased, the flow rate of the refrigerant circulating in the refrigeration cycle is decreased. As a result, a cooling capacity is decreased or a degree of superheat is increased.

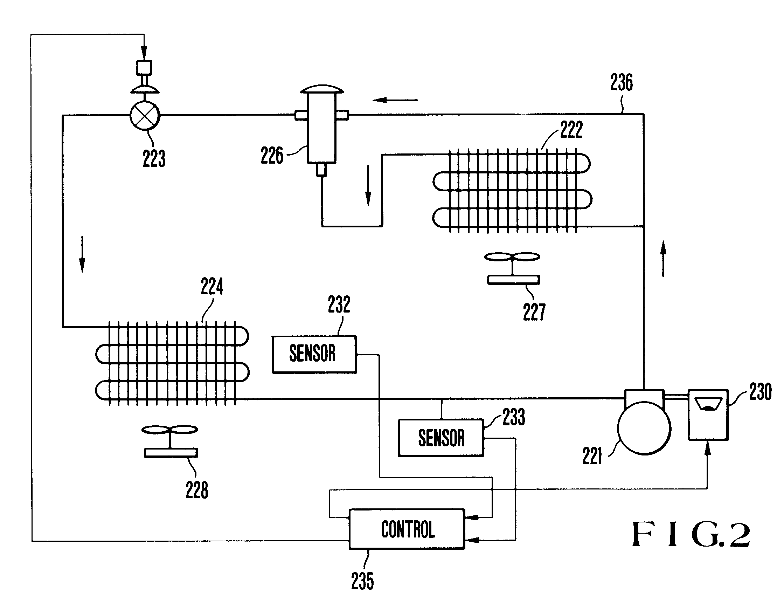

In order to eliminate the above problems, in the conventional apparatus, a bypass is arranged along a path extending from the compressor to the expansion valve, and a condensing pressure control valve 226 in Fig. 2 is arranged at a merging point of the bypass and a path via the condenser. The condensing pressure control valve is a three-way valve in which a predetermined pressure of a gas is sealed. When the condensing pressure is decreased, the control valve automatically opens the valve of the bypass, so that the condensing pressure is increased up to a value as high as that when the outside temperature is high. In this manner, the control valve can prevent the evaporative pressure and the cooling capacity from being decreased.

However, when the outside temperature is low, since a pressure difference between the condensing pressure and the evaporative pressure can be small, this method loses an opportunity of a low-compressiong power operation of the cooling apparatus. In this method, the condensing pressure is increased to increase the pressure difference between the condensing pressure and the evaporative pressure, thereby increasing compression power to operate the apparatus, resulting in a noneconomical operation method.

If the problem of the operation of the cooling apparatus shown in Fig. 1 at a low outside temperature is solved in view of keeping a sufficient refrigerant circulation amount, a method of increasing the maximum valve lift of the expansion valve 123 may be employed. The method of increasing the valve lift of the expansion valve includes a method of arranging a plurality of expansion valves parallel to each other, or a method of mounting an expansion valve having a capacity larger than a conventional value (e.g., an expansion valve for a cooling capacity of 10 RT (ton of refrigeration) is attached to an air conditioner of a cooling capacity of 5 RT). Note that "RT" is a unit indicating a cooling capacity of the cooling apparatus, and 1 RT = 3,320 kcal/h. When the valve lift of the expansion valve is increased, the low condensing pressure state is maintained, and an operation with low compression power in the compressor is allowed.

However, in this operation method, the valve lift of the expansion valve is limited. If the number of expansion valves is increased too much (three or four valves are mounted), or if an expansion valve having an excessively large capacity (e.g., an expansion valve for 15 RT is attached to an air conditioner of a cooling capacity of 5 RT) is used, superheat control cannot be accurately performed when the condensing pressure is high. Thus, this method also has a limitation. When an outside temperature is decreased, the condensing pressure is excessively decreased. Even if the expansion valve is fully opened, the refrigerant circulation amount is decreased, and the degree of superheat is undesirably increased.

The GB-A-898 327 describes a cooling operation of air conditioners effected when the open air temperature is low in, for example, winter. A valve operates in such a manner that a valve portion is moved under the influence of balance of pressures prevailing frontwardly and rearwardly of a diaphragm to regulate the coolant flow rate from the condenser side and the coolant flow rate from the bypass side in order to prevent the condenser pressure from falling below a predetermined value.

The US-A-4 735 059 discloses an apparatus in which pressure in a sub-receiver is made to be higher than that in a receiver to prevent a flash gas from flowing from the sub-receiver to an expansion valve. An outlet pressure regulator valve prevents pressure in the outlet of the valve from falling below a predetermined value. Accordingly, a system of this citation is operable to control the condenser pressure such that it does not fall below a predetermined value.

## Summary of the Invention

The present invention has been made to improve the poor efficiency of the prior art caused such that an air conditioner is operated while compression power is increased to a value as high as that when an outside temperature is high even when the outside temperature is low, and has as its object to provide a method for controlling an cooling apparatus with small compression power, which allows an economical operation of the apparatus.

The present invention relates to a method for controlling a cooling apparatus for performing cooling throughout the year, wherein in order to allow an economical operation of the cooling apparatus with small compression power, a bypass is provided to a path extending from a compressor to an expansion valve via a condenser, and a means for controlling a ratio of a flow rate of a refrigerant of the path via the condenser to that of the bypass path is arranged, or a means for varying an air volume of a fan of an outdoor unit for blowing the condenser is arranged so as to vary a capacity of the condenser. In operation, the degree of superheat of the refrigerant is measured at an exit of the evaporator, and an expansion valve is controlled in accordance with the measured degree of superheat. However, even if the expansion valve is fully opened, when a pressure difference between the condensing pressure and the evaporative pressure is small so that the flow rate of the refrigerant circulating the refrigeration cycle is decreased and the degree of superheat is increased, the condensing pressure is controlled by the means in accordance with a difference between a preset degree of superheat and the measured degree of superheat, thereby controlling the degree of superheat.

When the condensing pressure is decreased and a compression ratio as a ratio of a delivery pressure to a suction pressure of the compressor becomes lower than an allowable minimum compression ratio of the compressor, the condensing pressure is increased to a mimimum pressure which exceeds the allowable minimum compression ratio.

Unlike in the prior art, a low condensing pressure at a low outside temperature is effectively utilized, and an economical operation with small compression power can be achieved.

## Brief Description of the Drawings

Fig. 1 is a diagram showing a basic arrangement of a cooling apparatus;

Fig. 2 is a diagram showing an arrangement of a conventional cooling apparatus;

Fig. 3 is a diagram showing a cooling apparatus according to an embodiment of the present invention, which employs a variable setting pressure type condensing pressure control valve as a condensing pressure control device;

Fig. 4 is a diagram showing a cooling apparatus according to another embodiment of the present invention, which employs two control valves as the condensing pressure control device;

Fig. 5 is a diagram showing a cooling apparatus according to still another embodiment of the present invention, which employs both the condensing pressure control devices shown in Figs. 3 and 4 and in which a bypass extends from a portion midway along a condenser;

Fig. 6 is a diagram showing a cooling apparatus according to still another embodiment of the present invention, which employs both the condensing pressure control devices shown in Figs. 3 and 4 and in which a bypass portion performs heat exchange as a condenser;

Fig. 7 is a diagram showing a cooling apparatus according to still another embodiment of the present invention, which employs both the condensing pressure control devices shown in Figs. 3 and 4 and in which a plurality of bypasses for performing heat exchange as a condenser are arranged;

Fig. 8 is a diagram showing a cooling apparatus according to still another embodiment of the present invention, which employs variable rotational speed fans of an outdoor unit as a condensing pressure control device;

Fig. 9 is a sectional view showing an arrangement of a variable setting pressure type condensing pressure control valve;

Fig. 10 is a flow chart showing an operation of the cooling apparatus according to the present invention, which employs the variable setting pressure type compression pressure control valve as the condensing pressure control device;

Fig. 11 is a flow chart showing an operation of the cooling apparatus according to the present invention which employs two control valves as the condensing pressure control device;

Fig. 12 is a flow chart showing an operation of the cooling apparatus according to the present invention, which employs the variable rotational speed fan of the outdoor unit as the condensing pressure control device;

Fig. 13 is a graph comparing coefficients of performance (COPs) of a case wherein the cooling apparatus is controlled by the conventional method and a case wherein the cooling apparatus is controlled by the method of the present invention; and

Fig. 14 is a graph showing performance of an air conditioner to which the control method of the present invention is applied.

Description of the Preferred Embodiments

Embodiments of the present invention will be described hereinafter with reference to the accompanying drawings.

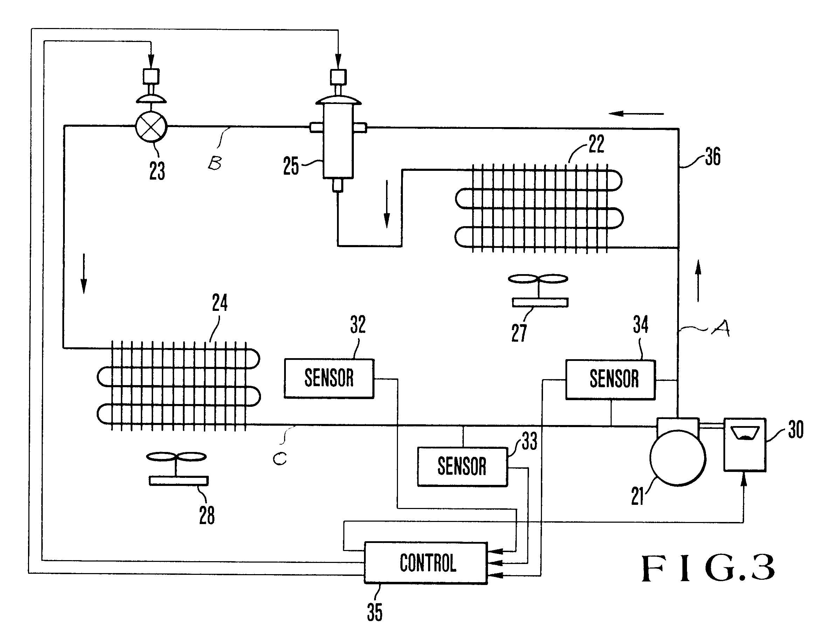

Fig. 3 shows an embodiment of a cooling apparatus using a variable setting pressure type condensing pressure control valve 25. More specifically, the cooling apparatus includes a compressor 21 having a rotational speed control means 30, a condenser 22, a fan 27 of an outdoor unit for blowing the condenser, an evaporator 24, a fan 28 of an indoor unit for blowing the evaporator 24, a path for guiding a refrigerant delivered from the compressor 21 via the condenser 22, a bypass path 36 for guiding the refrigerant while bypassing the condenser 22, a variable setting pressure type condensing pressure control valve 25 arranged at a merging point between both the paths as a means for controlling the flow rates of both the paths, a path for guiding the refrigerant flowing out from the control valve 25 toward the evaporator, an expansion valve 23 arranged between the control valve 25 and the evaporator 24, and a path for returning the refrigerant flowing out from the evaporator toward the compressor. This apparatus comprises a compression ratio sensor 34 for detecting a ratio of a delivery pressure of the compressor 21 to a suction pressure, a superheat sensor 33 for detecting a degree of superheat at a suction port of the compressor 21, and a control unit 35 for performing an arithmetic operation of two signals, i.e., a signal from the compression ratio sensor 34 and a superheat signal from the superheat sensor 33, and for supplying a control signal to the expansion valve 23 and the control valve 25. Note that reference numeral 32 denotes a room temperature detecting means.

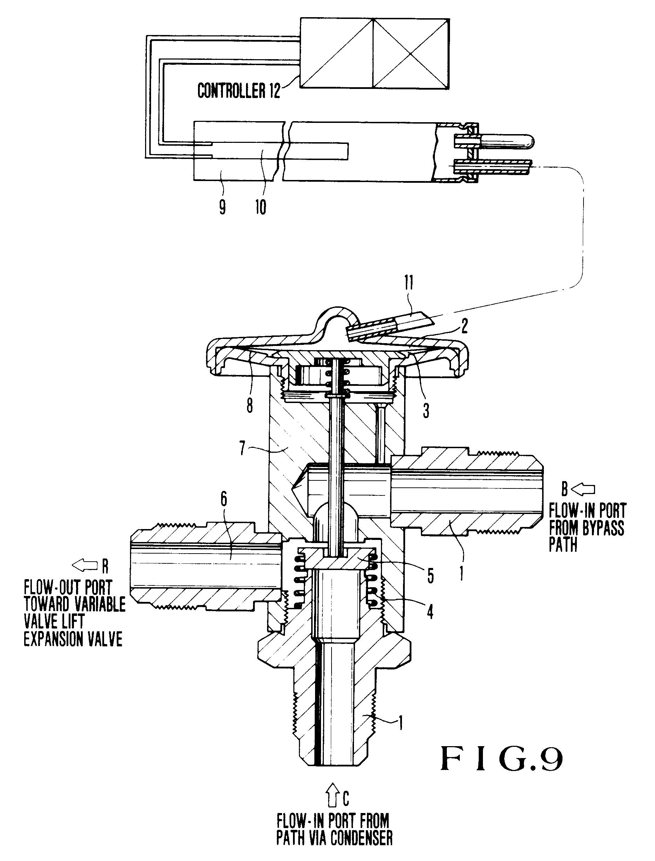

Fig. 9 shows an arrangement of the variable setting pressure type condensing pressure control valve 25. Reference numeral 1 denotes a refrigerant entrance; 2, a diaphragm inner chamber; 3, a diaphragm outer chamber; 4, a spring; 5, a valve portion; 6, a refrigerant exit; 7, a main body; 8, a diaphragm; 9, a feeler bulb; 10, a heater; 11, a conduit; and 12, a controller for controlling the heater based on a control signal from the control unit. Reference symbol B denotes a flow-in port from the bypass path 36; C, a flow-in port from the path via the condenser 22; and R, a flow-out port toward the expansion valve 23. The diaphragm inner chamber 2 communicates with the feeler bulb 9 through the conduit 11. A liquid-gas mixture, a pressure of which is changed in accordance with temperatures, is sealed in the cylinder 9. When the heater 20 embedded in the cylinder 9 is energized, the temperature of the gas is increased, and as a result, the pressure in the diaphragm inner chamber 2 is increased. Therefore, when electric power to the heater 10 is increased/decreased, the pressure in the diaphragm inner chamber 2 can be desirably controlled, and hence, the pressure in the condenser 22 can be desirably controlled. For example, when a condensing pressure is excessively decreased because of a low outside temperature and must be increased, electric power to the heater 10 is increased, so that the valve portion 5 closes the flow-in port C from the path via the condenser 22, and opens the flow-in port B from the bypass path. When the C-R circuit is closed, the refrigerant liquid is stored in the condenser 22 to decrease an effective area of the condenser 22, thereby increasing the condensing pressure. When the condensing pressure is increased and exceeds a preset pressure, the valve portion 5 is moved upward to open the C-R circuit and to close the B-R circuit. In this manner, the energization amount of the heater 10 is controlled, so that the condensing pressure can be set to be an arbitrary value.

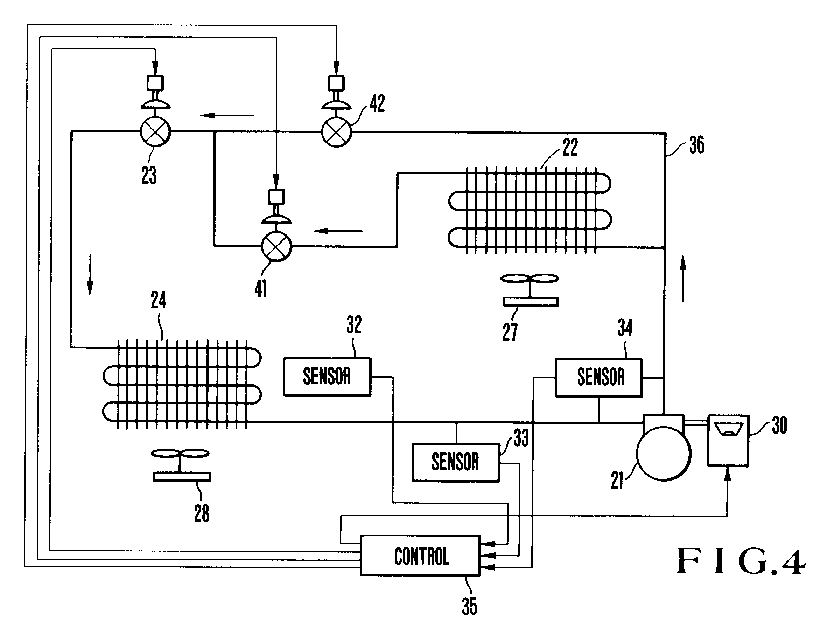

Fig. 4 shows an embodiment of the cooling apparatus using first and second control valves 41 and 42. In this embodiment, control made for the variable setting pressure type condensing pressure control valve

EP 0 355 180 B1

25 in the embodiment shown in Fig. 3 is made for the first and second control valves 41 and 42.

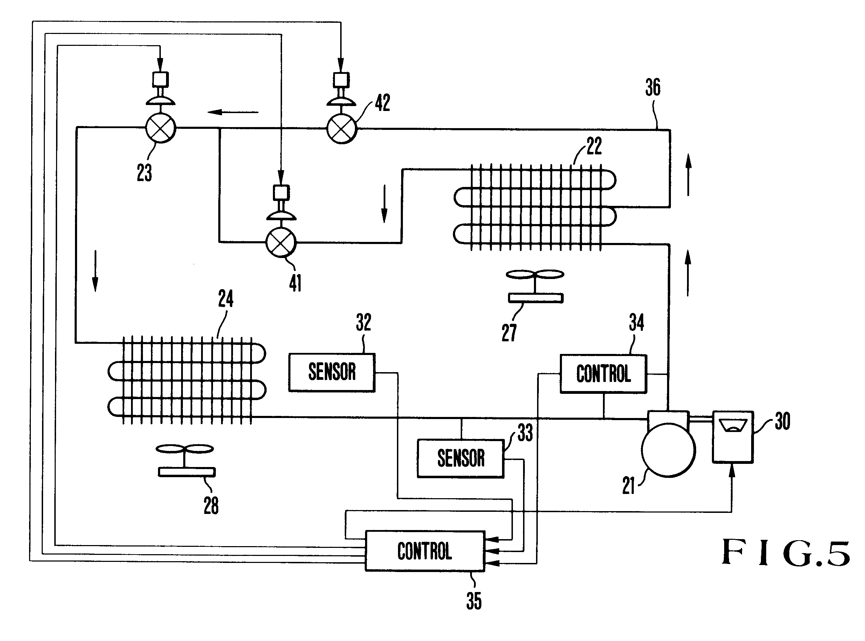

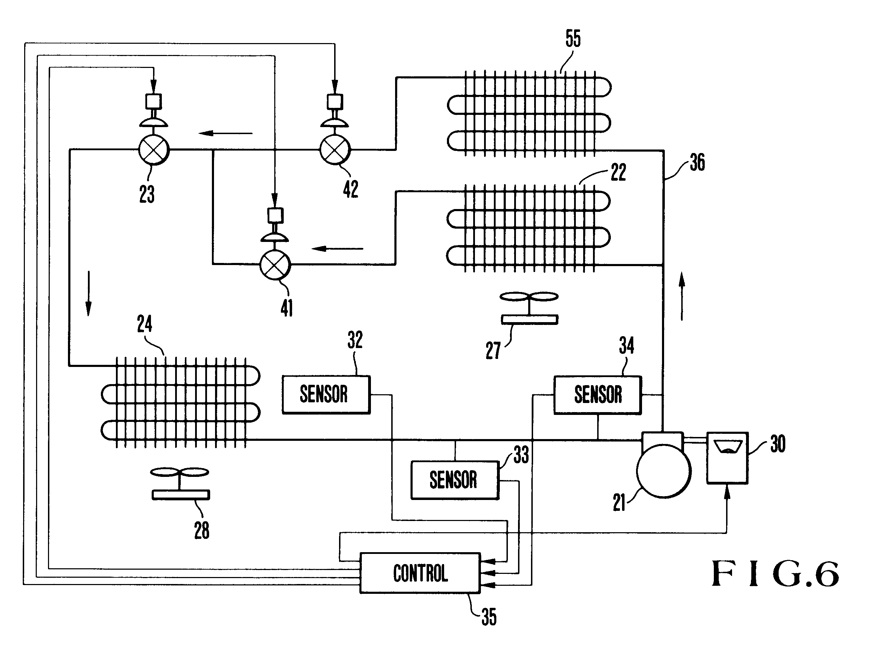

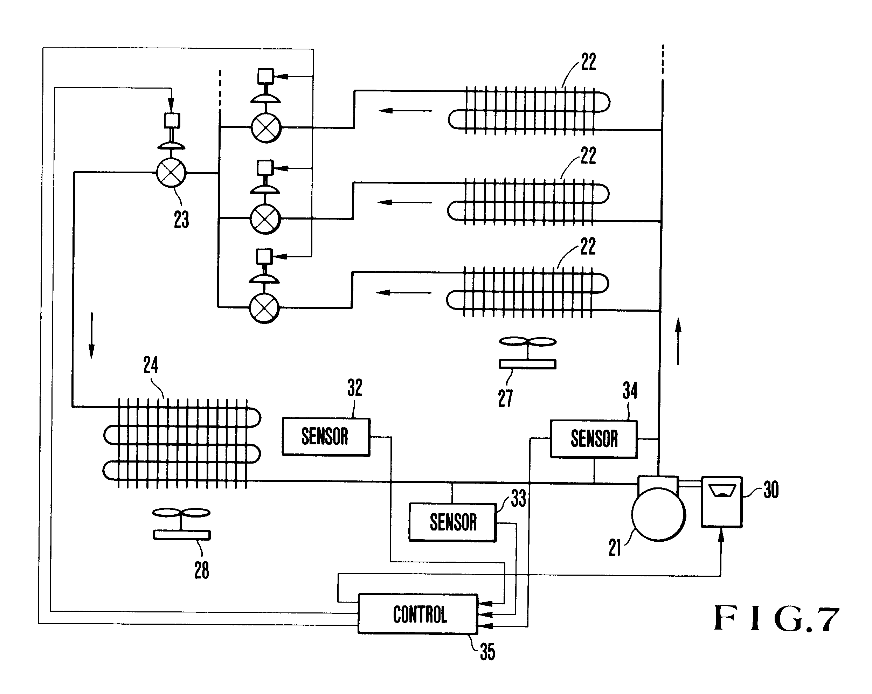

In the embodiments shown in Figs. 3 and 4, the bypass path extends from the entrance of the condenser 22. Fig. 5 shows an embodiment wherein the bypass path extends from a midway along the condenser. Fig. 6 shows an embodiment wherein the bypass path portion serves as a second condenser 55 for performing heat exchange. Fig. 7 shows an embodiment wherein a plurality of bypass paths serving as condensers for performing heat exchange are arranged, and a control valve is arranged for each path. The arrangements shown in Figs. 3 to 7 can be desirably selected in accordance with the scale, installation conditions of the cooling apparatus and the like.

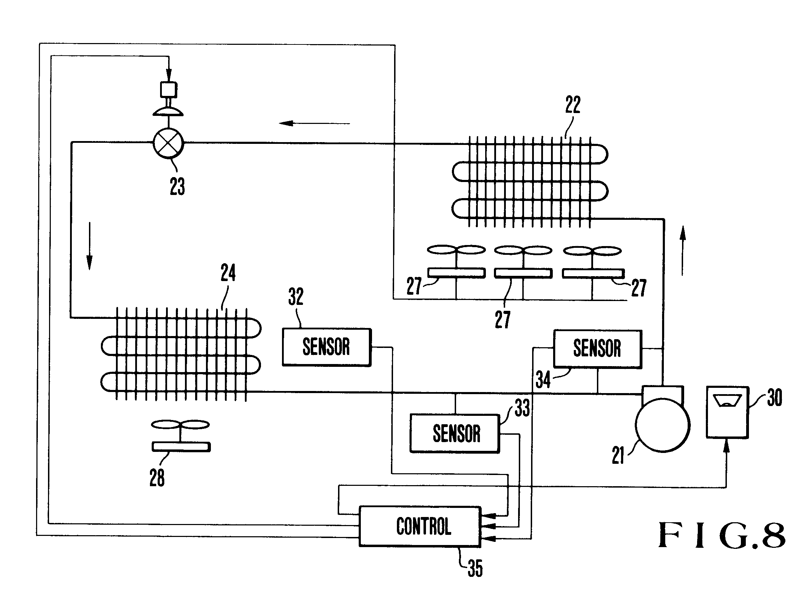

Fig. 8 shows an embodiment of the cooling apparatus which employs a plurality of independently controllable fans 27 of an outdoor unit. In this embodiment, control made for the variable setting pressure type condensing pressure control valve 25 in the embodiment shown in Fig. 3 is made for the fans 27. The fans 27 can be replaced with one or a plurality of variable rotational speed fans.

The six embodiments have been explained above. That is, any arrangement may be adopted as long as a condensing pressure can be controlled at a low outside temperature. An arrangement which comprises both a variable setting pressure type variable valve lift condensing pressure control valve and a variable rotational speed fan of an outdoor unit may be adopted.

A method of controlling a cooling apparatus according to the present invention will be described hereinafter. When an outside temperature is low, in the operation method of the present invention, a condensing pressure is left to take its own course, and the valve lift of the expansion valve 23 is increased as large as possible, thereby controlling the degree of superheat. The method of increasing the valve lift of the expansion valve 23 includes a method of arranging a plurality of expansion valves parallel to each other, or a method of mounting an expansion valve having a capacity larger than a conventional value (e.g., an expansion valve for a cooling capacity of 10 RT is attached to an air conditioner of a cooling capacity of 5 RT). When the valve lift of the expansion valve 23 is increased, a low condensing pressure state is maintained, and as a result, an operation of the compressor 21 with low compression power is allowed. However, this operation method has the following drawbacks:

(1) Since the valve lift of the expansion valve 23 is limited, if the number of expansion valves is increased too much (three or four valves are arranged), or if an expansion valve having an excessive capacity is used (an expansion valve for 15 RT is attached to an air conditioner of a cooling capacity of 5 RT), the degree of superheat cannot be accurately controlled, and this method has a limitation.

(2) The compressor 21 has an allowable minimum compression ratio in view of a refrigeration machine oil.

For these reasons, when an outside temperature is decreased below about 10°C, the following problems occur:

(1) The condensing pressure is excessively decreased, and even if the expansion valve 23 is fully opened, a refrigerant circulation amount is decreased, and the degree of superheat is increased.

(2) A compression ratio of a delivery pressure to a suction pressure is decreased below an allowable minimum compression ratio of the compressor 21.

In order to avoid the above situation, the condensing pressure must be inevitably increased. However, since the condensing pressure control valve used in the conventional apparatus can set only a constant condensing pressure, the condensing pressure is unnecessarily increased if this valve is used without modifications, and compression power is increased. According to the present invention, a means for varying a condensing pressure is arranged to perform the following control.

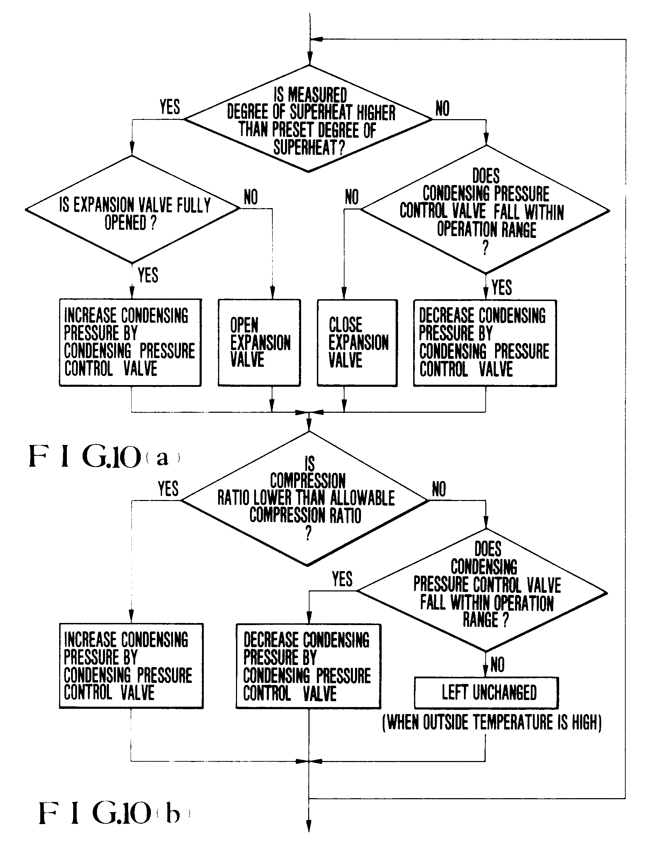

The operation method in the refrigeration cycle shown in Fig. 3 will be described below with reference to the flow charts shown in Figs. 10(a) and 10(b).

First, the degree of superheat is controlled. The degree of superheat is measured by the superheat sensor 33, and is compared with a preset degree of superheat. In a first process, if the measured degree of superheat is higher than the preset degree of superheat, the expansion valve 23 is opened in accordance with a difference therebetween in the same as in normal superheating control. In contrast to this, if the measured degree of superheat is lower than the preset degree of superheat, the expansion valve 23 is closed in accordance with a difference therebetween. However, in a second process, when an outside temperature is decreased and a condensing pressure is decreased accordingly and when the measured degree of superheat is higher than the preset degree of superheat (Y) and the expansion valve 23 is fully opened (Y), the valve lift of the variable valve lift condensing pressure control valve 25 is controlled in accordance with the difference between the measured and preset degrees of superheat so as to increase a flow rate of the refrigerant flowing through the bypass path. Thus, the condensing pressure is increased and the degree of superheat is decreased. Contrary to this, when the measured degree of superheat is lower than the preset degree of superheat (N) and when the variable setting pressure type condensing pressure

5

control valve 25 is operated (Y) to cause the refrigerant to flow toward the bypass path so as to increase the condensing pressure, the valve lift of the control valve 25 is controlled in accordance with the difference between the measured and preset degrees of superheat so as to decrease the flow rate of the refrigerant flowing through the bypass path. Thus, the condensing pressure is decreased and the degree of superheat is increased. With this method, even when the degree of superheat cannot be controlled by the expansion valve 23, it can be controlled by the control valve 25.

The fundamental control operation has been described above. If the following problem of the compression ratio of the compressor occurs after the above-mentioned control operation, the following control is made.

A compression ratio of the delivery pressure to the suction pressure of the compressor 21 is detected by the compression ratio sensor 34, and is compared with the stored allowable minimum compression ratio. If the measured compression ratio is lower than the allowable minimum compression ratio (Y), the valve lift of the control valve 25 is controlled in accordance with a difference between the measured compression ratio and the allowable minimum compression ratio so as to increase the flow rate of the refrigerant flowing through the bypass path. As a result, the condensing pressure is increased so that the compression ratio is increased to be higher than the allowable minimum compression ratio. However, if the measured compression ratio is higher than the allowable minimum compression ratio (N) but is too higher, for example, when a compression ratio is increased to 3.0 although the allowable minimum compression ratio is 2.0, compression power becomes too large, resulting in a noneconomical operation. Thus, when the measured compression ratio is higher than the allowable minimum compression ratio, the valve lift of the control valve 25 is controlled in accordance with the difference therebetween so as to decrease the flow rate of the refrigerant flowing through the bypass path. As a result, the condensing pressure is decreased, so that the cooling apparatus is always operated at a compression ratio near the allowable minimum compression ratio. When the outside temperature is high and the control valve 25 does not need to work (N), the control valve lift is left unchanged.

This control operation is necessary only when the compressor can be operated at a certain constant compression ratio or more. If this problem is solved in the compressor, this control operation is unnecessary.

The room temperature sensor 32 shown in Figs. 3 to 8 compares a room temperature and a preset temperature, and the difference therebetween is fred back to the rotational speed control means 30 of the compressor 21 through the control unit 35. More specifically, if the room temperature is higher than the preset temperature, the rotational speed of the compressor 21 is increased; otherwise, it is decreased. Such control is performed in the conventional cooling apparatus.

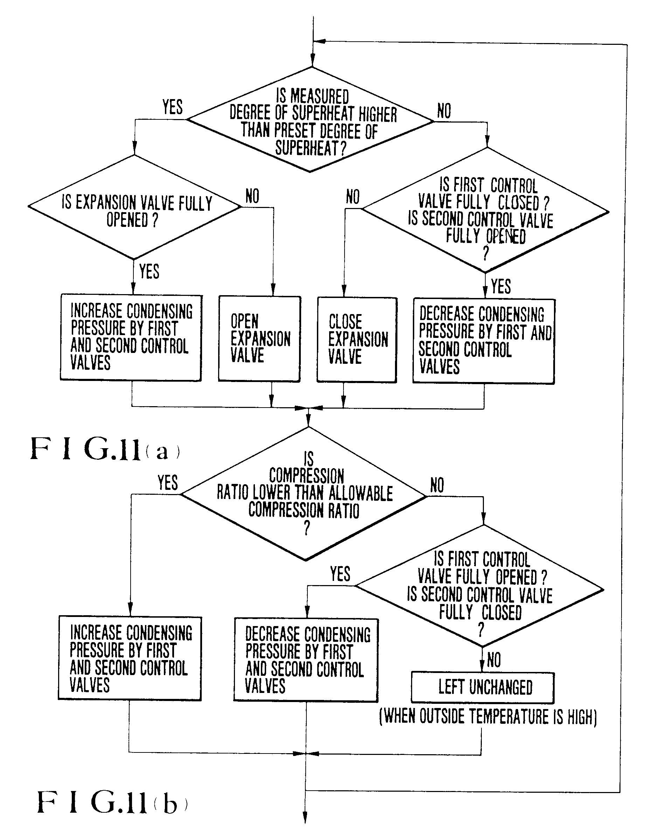

The operation method in the arrangement shown in Fig. 4 will be described below with reference to the flow charts shown in Figs. 11(a) and 11(b).

Control in the first process is the same as that in the control method of the arrangement shown in Fig. 3. In a second process, if the measured degree of superheat is higher than the preset degree of superheat (Y) and the expansion valve 23 is fully opened (Y), the valve lifts of the first and second control valves 41 and 42 are controlled in accordance with a difference between the measured and preset degrees of superheat so as to increase the flow rate of the refrigerant flowing through the bypass path. Thus, the condensing pressure is increased and the degree of superheat is decreased. With this method, even when the degree of superheat cannot be controlled by the expansion valve 23, the degree of superheat can be controlled by the first and second control valves 41 and 42.

The control operation of the compression ratio is the same as that in the control method of the arrangement shown in Fig. 3. If the measured compression ratio is lower than the allowable minimum compression ratio (Y), the valve lifts of the first and second control valves 41 and 42 are controlled in accordance with the difference between the measured compression ratio and the allowable mimimum compression ratio so as to increase the flow rate of the refrigerant flowing through the bypass path. Thus, the condensing pressure is increased, so that the compression ratio is increased to be higher than the allowable minimum compression ratio. However, if the measured compression ratio is higher than the allowable minimum compression ratio (N) but is too high, for example, when a compression ratio is increased to 3.0 although the allowable minimum compression ratio is 2.0, compression power becomes too high, resulting in a noneconomical operation. Thus, when the measured compression ratio is higher than the allowable minimum compression ratio, the valve lifts of the first and second control valves 41 and 42 are controlled in accordance with the difference therebetween so as to decrease the flow rate of the refrigerant flowing through the bypass path. As a result, the condensing pressure is decreased, so that the cooling apparatus is always operated at a compression ratio near the allowable minimum compression ratio.

When the outside temperature is high, the first control valve 41 is fully opened, and the second control

6

valve 42 is completely closed.

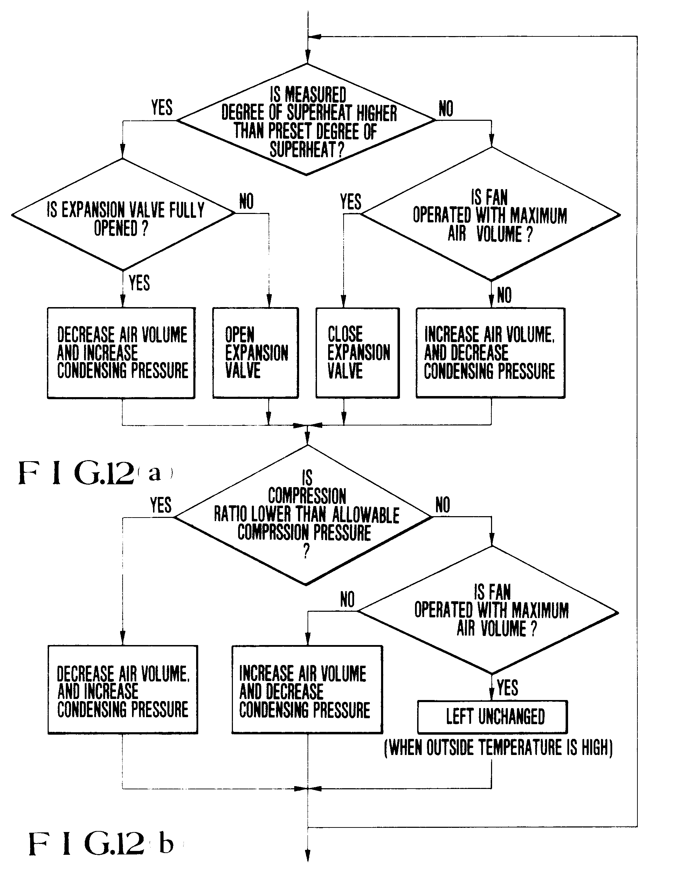

The operation method in the arrangement shown in Fig. 8 will be described with reference to the flow chart shown in Figs. 12(a) and 12(b).

The control operation in the first process is the same as that in the arrangements shown in Figs. 3 and 4. In a second process, if the measured degree of superheat is higher than the preset degree of superheat (Y) and the expansion valve 23 is fully opened (Y), the air volume of the fan 27 of the outdoor unit is decreased in accordance with the difference between the measured and preset degrees of superheat so as to increase the condensing pressure and to decrease the degree of superheat. Contrary to this, if the measured degree of superheat is lower than the preset degree of superheat (N) and the air volume of the fan 27 is decreased (Y) to increase the condensing pressure, the air volume of the fan 27 is increased in accordance with the difference between the measured and preset degrees of superheat, thereby decreasing the condensing pressure and increasing the degree of superheat. With this method, when the degree of superheat cannot be controlled by the expansion valve 23, the air volume of the fan 27 is controlled so as to control the degree of superheat.

In the control operation of the air volume, when the fan of the outdoor unit comprises a plurality of fans, some fans are intermittently operated.

The control of the compression ratio is the same as in the control method of the arrangements shown in Figs. 3 and 4. When the measured compression ratio is lower than the allowable minimum compression ratio (Y), the air volume of the fan 27 is decreased in accordance with the difference between the measured compression ratio and the allowable minimum compression ratio, so that the condensing pressure is increased and the compression ratio is increased to be higher than the allowable minimum compression ratio. However, if the measured compression ratio is higher than the allowable minimum compression ratio (N) but is too higher, for example, when a compression ratio is increased to 3.0 although the allowable minimum compression ratio is 2.0, compression power becomes too high, resulting in a noneconomical operation. Thus, when the measured compression ratio is higher than the allowable minimum compression ratio, the air volume of the fan 27 is increased controlled in accordance with the difference therebetween so as to decrease condensing pressure, so that the cooling apparatus is always operated at a compression ratio near the allowable minimum compression ratio.

When the outside temperature is high, the fan 27 of the outdoor unit is operated to blow the maximum air volume.

According to the present invention as described above, the following effects can be obtained.

(1) When the cooling apparatus is operated at a low outside temperature, the condensing pressure control device is used. Thus, even when the expansion valve is fully opened so that the refrigerant circulation amount is small and the degree of superheat is high, the flow rate of the refrigerant bypassing the condenser is controlled or the air volume to the condenser is controlled so as to control the degree of superheat. In addition, the condensing pressure is suppressed to a minimum necessary pressure, thus allowing an every-saving operation.

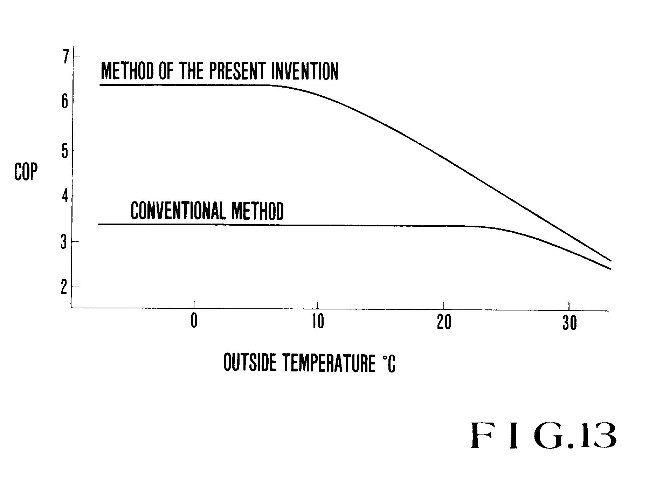

Fig. 13 is a graph comparing coefficients of performance (COPs) of the present invention and the prior art shown in Fig. 2. The COP is defined as follows:

$$COP = \frac{\text{Cooling Capacity of Air Conditioner [kW]}}{\text{Input Electric Power to Compressor [kW]}}$$

With the arrangement and control method of the present invention, a difference in COP significantly appears when the outside temperature is 20°C or less. When the outside temperature is 5°C or less, the COP becomes about 2.5 times that of the conventional method.

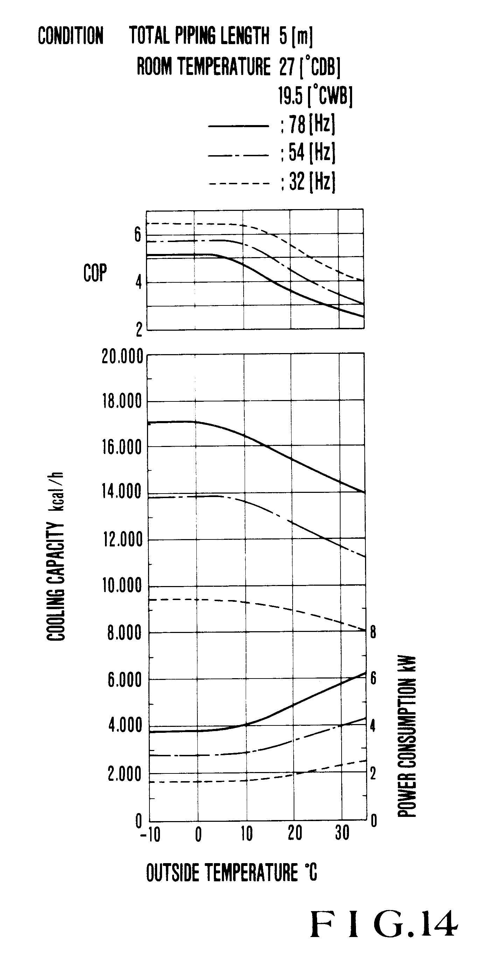

Fig. 14 is a graph showing performance of an air conditioner to which the control method of the present invention is applied. As can be seen from Fig. 14, in the control method of the present invention, when the outside temperature is low, the cooling capacity is increased and power consumption is reduced even at an identical operation frequency of the compressor as compared to a case wherein the outside temperature is high. Thus, the operation with the large COP can be performed.

(2) When the cooling apparatus is operated at a low outside temperature, even if a ratio of a delivery pressure to a suction pressure is lower than the allowable minimum compression ratio, the flow rate of the refrigerant bypassing the condenser is controlled or the air volume to the condenser is controlled so as to set a minimum necessary condensing pressure. Thus, an energy-saving operation can be performed while protecting the compressor.

7

## Claims

1. A method of controlling a cooling apparatus comprising a compressor (21), a condenser (22), at least one fan (27) of an outdoor unit for blowing said condenser (22), an evaporator (24), a fan (28) of an indoor unit for blowing said evaporator (24), a path (A,B,C) for guiding a refrigerant from the compressor (21) towards the evaporator (24) via the condenser (22) and back to the compressor (21), an expansion valve (23) arranged between the condenser (22) and the evaporator (24), a superheat sensor (33) for detecting a degree of superheat of the refrigerant at a suction port of the compressor (21), means (25,36;27) for decreasing the superheat including a bypass path (36) for guiding the refrigerant while bypassing the condensor (22) and means (25,41,42) for controlling a flow rate ratio of the path (A) from the compressor (21) to said bypass path (36) or including a plurality of independently controllable fans (27) of the outdoor unit, and a control unit (35) for supplying control signals to the expansion valve (23) and said means (36,25;27) for decreasing the superheat such that when the degree of superheat detected by the superheat sensor (33) is higher than a preset value, the expansion valve (23) is controlled to be opened and when the degree of superheat is higher than the preset value after the expansion valve (23) is fully opened, the means for decreasing the superheat are controlled to further reduce the degree of superheat.

2. A method according to claim 1, wherein when the degree of superheat is higher than the preset value after the expansion valve (23) is fully opened, bypass path (36) is controlled to be opened by the means (25,41,42) for controlling the flow rate ratio, thereby decreasing the degree of superheat.

3. A method according to claim 1, wherein when the degree of superheat is higher than the preset value after the expansion valve (23) is fully opened, air volumes of the fans (27) of the outdoor unit are decreased to decrease the degree of superheat.

4. A cooling apparatus for realizing the method according to one of claims 1 to 3, comprising: a compressor (21); a condenser (22); a fan (27) of an outdoor unit for blowing said condenser (22); an evaporator (24); a fan (28) of an indoor unit for blowing said evaporator; a path (A,B,C) for guiding a refrigerant from the compressor (21) via the condenser (22) towards the evaporator (24) and back to the compressor (21); an expansion valve (23) arranged between condenser (22) and evaporator (24); means (25,36,27) for decreasing the superheat including a bypass path (36) for guiding the refrigerant while bypassing the condenser and means (25,41,42) for controlling a flow rate ratio of the path to the bypass path (36) and/or a plurality of fans (27) of the outdoor unit; a superheat sensor (33) for detecting a degree of superheat of the refrigerant at a suction port of the compressor (21); and a control unit (35) for receiving signals from the superheat sensor (33) and for supplying a control signal to the expansion valve (23) and the means (25,41,42) for controlling the flow rate ratio of the path (A) from said compressor (21) to the bypass path or the plurality of fans, such that when the degree of superheat detected by the superheat sensor is higher than a preset value, the expansion valve is controlled to be opened and when the degree of superheat is higher than the preset value after the expansion valve is fully opened, the means for decreasing the superheat are controlled to increase the condenser pressure and reduce the degree of superheat.

## Patentansprüche

1. Verfahren zum Steuern einer Kühlvorrichtung mit einem Kompressor (21), einem Kondensor (22), mindestens einem Ventilator (27) einer Außeneinheit zum Anblasen des Kondensors (22), einem Verdampfer (24), einem Ventilator (28), einer Inneneinheit zum Anblasen des Verdampfers (24), einem Leitungsweg (A,B,C) zum Leiten eines Kühlmittels vom Kompressor (21) zum Verdampfer (24) über den Kondensor (22) und zurück zum Kompressor (21), einem zwischen dem Kondensor (22) und dem Verdampfer (24) angeordneten Expansionsventil (23), einem Überhitze-Sensor (23) zum Erfassen des Grades an Überhitze des Kühlmittels an der Ansaugöffnung des Kompressors (21), einer Einrichtung (25,36;27) zum Verringern der Überhitze einschließlich eines Bypass-Leitungsweges (36) zum Leiten des Kühlmittels unter Umgehung des Kondensors (22) und einer Einrichtung (25,41,42) zum Steuern des Verhältnisses der Durchflußmenge des Leitungsweges (A) vom Kompressor (21) zum Bypassleitungsweg (36) oder einschließlich einer Mehrzahl von unabhängig voneinander steuerbaren Ventilatoren (27) der Außeneinheit, und einer Steuereinheit (35) zum Liefern von Steuersignalen an das Expansionsventil (23) und die Einrichtung (36,25;27) zum Verringern der Überhitze, derart, daß, wenn der durch

8

EP 0 355 180 B1

den Überhitze-Sensor (33) festgestellte Grad der Überhitze größer ist als ein vorbestimmter Wert, das Expansionsventil (23) auf offen gesteuert wird, und wenn der Grad der Überhitze höher als der vorbestimmte Wert ist, nachdem das Expansionsventil voll geöffnet ist, die Einrichtung zum Verringern der Überhitze so gesteuert wird, daß sie weiter den Grad der Überhitze verringert.

2. Verfahren nach Anspruch 1, bei dem, wenn der Grad der Überhitze höher als der vorbestimmte Wert ist, nachdem das Expansionsventil (23) voll geöffnet wurde, der Bypass-Leitungsweg (36) durch die Einrichtung (25,41,42) zum Steuern des Durchflußmengenverhältnisses offen gesteuert wird, wodurch der Grad der Überhitze verringert wird.

3. Verfahren nach Anspruch 1, bei dem, wenn der Grad der Überhitze höher als der vorbestimmte Wert ist, nachdem das Expansionsventil (23) voll geöffnet wurde, die Luftmengen der Ventilatoren (27) der Außeneinheit verringert werden, um den Grad der Überhitze zu verringern.

4. Kühlvorrichtung zum Durchführen des Verfahrens nach einem der Ansprüche 1 bis 3 mit einem Kompressor (21); einem Kondensor (22); einem Ventilator (27) einer Außeneinheit zum Anblasen des Kondensors (22); einem Verdampfer (24); einem Ventilator (28) einer Inneneinheit zum Anblasen des Verdampfers; einem Leitungsweg (A,B,C) zum Leiten eines Kühlmittels vom Kompressor (21) über den Kondensor (22) zu dem Verdampfer (24) und zurück zum Kompressor (21); einem zwischen Kondensor (22) und Verdampfer (24) angeordneten Expansionsventil (23); einer Einrichtung (25,36;27) zum Verringern der Überhitze einschließlich eines Bypass-Leitungsweges (36) zum Leiten des Kühlmittels unter Umgehung des Kondensors (22) und einer Einrichtung (25,41,42) zum Steuern des Durchflußmengenverhältnisses des Leitungsweges zu dem Bypass-Leitungsweg (36) und/oder einer Mehrzahl von Ventilatoren (27) der Außeneinheit; einem Überhitze-Sensor (33) zum Erfassen des Grades der Überhitze des Kühlmittels an der Ansaugöffnung des Kompressors (21); und einer Steuereinheit (35) zum Empfangen von Signalen von dem Überhitze-Sensor (33) und zum Liefern eines Steuersignals an das Expansionsventil (23) und die Einrichtung (25,41,42) zum Steuern des Durchflußmengenverhältnisses des Leitungsweges (A) vom Kompressor (21) zum Bypass-Leitungsweg oder der Mehrzahl von Ventilatoren, derart, daß, wenn der vom Überhitze-Sensor erfaßte Grad der Überhitze höher ist als ein vorbestimmter Wert, das Expansionsventil offen gesteuert wird, und wenn der Grad der Überhitze höher ist als ein vorbestimmter Wert, nachdem das Expansionsventil voll geöffnet wurde, die Einrichtung zum Verringern der Überhitze angesteuert wird, um den Kondensordruck zu erhöhen und den Grad der Überhitze zu verringern.

**Revendications**

1. Procédé pour commander un appareil de refroidissement comportant un compresseur (21), un condenseur (22), au moins un ventilateur (27) d'une unité extérieure pour souffler vers ledit condenseur (22), un évaporateur (24), un ventilateur (28) d'une unité intérieure pour souffler vers ledit évaporateur (24), un trajet (A, B, C) pour guider un réfrigérant à partir du compresseur (21) vers l'évaporateur (24) par l'intermédiaire du condenseur (22) et en retour vers le compresseur (21), une valve d'expansion (23) disposée entre le condenseur (22) et l'évaporateur (24), un détecteur de surchauffe (33) pour détecter un degré de surchauffe du réfrigérant à un orifice d'aspiration du compresseur (21), des moyens (25, 36 ; 27) pour diminuer la surchauffe comportant un trajet de dérivation (36) pour guider le réfrigérant lorsqu'il contourne le condenseur (22) et des moyens (25, 41, 42) pour contrôler un taux d'écoulement du trajet (A) à partir du compresseur (21) vers ledit trajet de contournement (36) ou comportant un ensemble de ventilateurs susceptibles d'être commandés de façon indépendante (27) de l'unité extérieure et une unité de commande (35) pour fournir des signaux de commande à la valve d'expansion (23) et auxdits moyens (36, 25 ; 27) pour diminuer la surchauffe de telle sorte que lorsque le degré de surchauffe détecté par le détecteur de surchauffe (33) est supérieur à une valeur prédéterminée, la valve d'expansion (23) est commandée pour être ouverte et lorsque le degré de surchauffe est supérieur à la valeur prédéterminée après ouverture totale de la valve d'expansion (23), les moyens pour diminuer la surchauffe sont contrôlés pour continuer à réduire le degré de surchauffe.

2. Procédé selon la revendication 1 dans lequel lorsque le degré de surchauffe est supérieur à la valeur prédéterminée une fois la valve d'expansion (23) ouverte totalement, le trajet de contournement (36) est commandé pour être ouvert par les moyens (25, 41, 42) pour commander le taux d'écoulement ce qui a pour effet de diminuer le degré de surchauffe.

9

**3.** Procédé selon la revendication 1 dans lequel lorsque le degré de surchauffe est supérieur à la valeur prédéterminée une fois la valve d'expansion (23) totalement ouverte, les volumes d'air des ventilateurs (27) de l'unité extérieure sont diminués pour diminuer le degré de surchauffe.

**4.** Appareil de refroidissement pour mettre en oeuvre le procédé selon l'une des revendications 1 à 3 comportant : un compresseur (21) ; un condenseur (22) ; un ventilateur (27) d'une unité externe pour souffler vers ledit condenseur (22) ; un évaporateur (24) ; un ventilateur (28) d'une unité extérieure pour souffler vers ledit évaporateur ; un trajet (A, B, C) pour guider un réfrigérant à partir du compresseur (21) par l'intermédiaire du condenseur (22) vers l'évaporateur (24) et en retour vers le compresseur (21) ; une valve d'expansion (23) disposée entre le condenseur (22) et l'évaporateur (24) ; des moyens (25, 36, 27) pour diminuer la surchauffe comportant un trajet de dérivation (36) pour guider le réfrigérant lorsqu'il contourne le condenseur et des moyens (25, 41, 42) pour contrôler un taux d'écoulement du trajet vers le trajet de dérivation (36) et/ou un ensemble de ventilateurs (27) de l'unité extérieure ; un détecteur de surchauffe (33) pour détecter un degré de surchauffe du réfrigérant à un orifice d'aspiration du compresseur (21) ; et une unité de commande (35) pour recevoir des signaux provenant du détecteur de surchauffe (33) et pour fournir un signal de commande à la valve d'expansion (23) et aux moyens (25, 41, 42) pour commander le taux d'écoulement du trajet (A) dudit compresseur (21) vers le trajet de contournement ou l'ensemble des ventilateurs, de telle sorte que lorsque le degré de surchauffe détecté par le détecteur de surchauffe est supérieur à une valeur prédéterminée, la valve d'expansion est commandée de façon à être ouverte et lorsque le degré de surchauffe est supérieur à la valeur prédéterminée une fois la valve d'expansion totalement ouverte, les moyens pour diminuer la surchauffe sont commandés pour augmenter la pression du condenseur et réduire le degré de surchauffe.

FIG.1

F I G.2

EP 0 355 180 B1

FIG.3

FIG.4

FIG.5

FIG.6

FIG.7

FIG.8

CONTROLLER 12

9  10

11

2

8  3

7

B ⟸
FLOW-IN PORT
FROM BYPASS
PATH

6

5  1

R ⟸
FLOW-OUT PORT
TOWARD VARIABLE
VALVE LIFT
EXPANSION VALVE

4

1

FIG.9

⟱ C
FLOW-IN PORT FROM
PATH VIA CONDENSER

19

IS MEASURED DEGREE OF SUPERHEAT HIGHER THAN PRESET DEGREE OF SUPERHEAT?

YES

NO

IS EXPANSION VALVE FULLY OPENED ?

NO

NO

DOES CONDENSING PRESSURE CONTROL VALVE FALL WITHIN OPERATION RANGE ?

YES

YES

INCREASE CONDENSING PRESSURE BY CONDENSING PRESSURE CONTROL VALVE

OPEN EXPANSION VALVE

CLOSE EXPANSION VALVE

DECREASE CONDENSING PRESSURE BY CONDENSING PRESSURE CONTROL VALVE

F I G.10 (a)

IS COMPRESSION RATIO LOWER THAN ALLOWABLE COMPRESSION RATIO ?

YES

NO

YES

DOES CONDENSING PRESSURE CONTROL VALVE FALL WITHIN OPERATION RANGE ?

INCREASE CONDENSING PRESSURE BY CONDENSING PRESSURE CONTROL VALVE

DECREASE CONDENSING PRESSURE BY CONDENSING PRESSURE CONTROL VALVE

NO

LEFT UNCHANGED

(WHEN OUTSIDE TEMPERATURE IS HIGH)

F I G.10 (b)

20

IS MEASURED DEGREE OF SUPERHEAT HIGHER THAN PRESET DEGREE OF SUPERHEAT?

YES

NO

IS EXPANSION VALVE FULLY OPENED ?

NO

NO

IS FIRST CONTROL VALVE FULLY CLOSED ? IS SECOND CONTROL VALVE FULLY OPENED ?

YES

YES

INCREASE CONDENSING PRESSURE BY FIRST AND SECOND CONTROL VALVES

OPEN EXPANSION VALVE

CLOSE EXPANSION VALVE

DECREASE CONDENSING PRESSURE BY FIRST AND SECOND CONTROL VALVES

# F I G.11 (a)

IS COMPRESSION RATIO LOWER THAN ALLOWABLE COMPRESSION RATIO ?

YES

NO

YES

IS FIRST CONTROL VALVE FULLY OPENED ? IS SECOND CONTROL VALVE FULLY CLOSED ?

INCREASE CONDENSING PRESSURE BY FIRST AND SECOND CONTROL VALVES

DECREASE CONDENSING PRESSURE BY FIRST AND SECOND CONTROL VALVES

NO

LEFT UNCHANGED

(WHEN OUTSIDE TEMPERATURE IS HIGH)

# F I G.11 (b)

21

F I G.12 (a)

F I G.12 (b)

EP 0 355 180 B1

FIG.13

CONDITION   TOTAL PIPING LENGTH  5 [m]
            ROOM TEMPERATURE  27 [°CDB]
                            19.5 [°CWB]
            ————————  : 78 [Hz]
            —·—·——    : 54 [Hz]
            --------  : 32 [Hz]

F I G.14